(19) Europäisches Patentamt / European Patent Office / Office européen des brevets

(11) **EP 1 369 704 B1**

(12) **FASCICULE DE BREVET EUROPEEN**

(45) Date de publication et mention
de la délivrance du brevet:
**28.11.2012  Bulletin 2012/48**

(51) Int Cl.:
***G01S 13/90*** *(2006.01)*      ***G01S 13/00*** *(2006.01)*

(21) Numéro de dépôt: **03291323.8**

(22) Date de dépôt: **03.06.2003**

(54) **Formations orientées le long du trajet de satellites SAR**

Auf die Bahn von SAR-Satelliten gerichtete Formation

Formations oriented along the path of SAR satellites

(84) Etats contractants désignés:
**AT BE BG CH CY CZ DE DK EE ES FI FR GB GR HU IE IT LI LU MC NL PT RO SE SI SK TR**

(30) Priorité: **03.06.2002  FR 0206776
28.10.2002  FR 0213440**

(43) Date de publication de la demande:
**10.12.2003  Bulletin 2003/50**

(73) Titulaire: **CENTRE NATIONAL D'ETUDES SPATIALES
75001 Paris (FR)**

(72) Inventeur: **Aguttes, Jean-Paul
31100 Toulouse (FR)**

(74) Mandataire: **Texier, Christian et al
Cabinet Regimbeau
20, rue de Chazelles
75847 Paris Cedex 17 (FR)**

(56) Documents cités:
**WO-A-99/58997**

• CHERNIAKOV M ET AL: "SECONDARY APPLICATIONS OF WIRELESS TECHNOLOGY (SAWT): THE CONCEPT" 2000 EUROPEAN CONFERENCE ON WIRELESS TECHNOLOGY CONFERENCE PROCEEDINGS. ECWT 2000. PARIS, OCT. 5 - 6, 2000, EUROPEAN CONFERENCE ON WIRELESS TECHNOLOGY. ECWT, LONDON: CMP, GB, 5 octobre 2000 (2000-10-05), pages 305-309, XP001060857 ISBN: 0-86213-217-7

EP 1 369 704 B1

**Description**

DOMAINE TECHNIQUE GENERAL.

La présente invention concerne les ensembles d'instruments pour des observations du sol.
Plus précisément, elle concerne des instruments montés sur des trains de satellites du type Radar à Synthèse d'Ouverture RSO ou « Synthetic Aperture Radar » (SAR) selon la terminologie anglo-saxonne généralement utilisée.

ETAT DE L'ART.

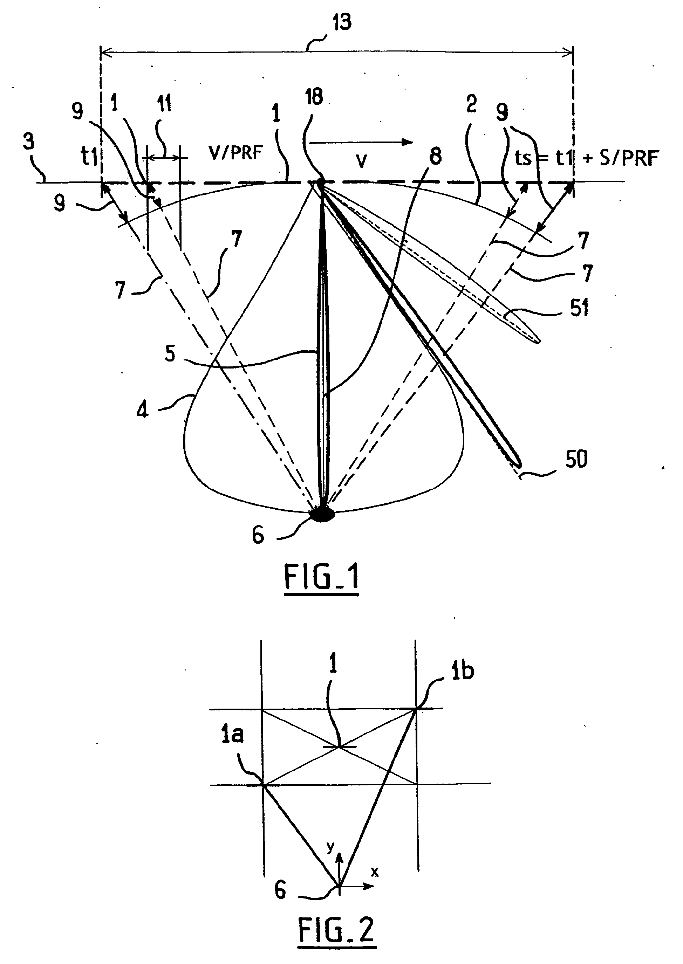

La figure 1 montre le principe de fonctionnement d'un instrument ou SAR 1 se déplaçant sur une trajectoire 3 dans le sens indiqué par le vecteur vitesse V.
Les différents traits en pointillés montrent les positions successives dans le temps du SAR 1 sur la trajectoire 3. Ils correspondent aux instants auxquels le SAR 1 émet une impulsion en direction d'un objet 6 à observer ou reçoit un signal venant de la cible 6. Ainsi, chaque trait point milieu de la position du SAR 1 est distant du précédent ou du suivant d'une distance 11 égale à V/PRF, où V est la vitesse de déplacement du SAR 1, et PRF est le « Pulse Répétition Frequency » selon la terminologie anglo-saxonne généralement utilisée, ou fréquence de répétition d'impulsion.
La figure 1 montre qu'avec un traitement du signal connu de l'homme du métier et appelé correction SAR, le petit SAR 1 remplace une grande antenne 2 qui s'enroulerait autour de l'objet 6 à observer, mais qui serait d'une longueur telle qu'elle est impossible à réaliser.

RAPPELS TECHNIQUES

On rappelle que plus une antenne est longue, plus sa résolution est grande, c'est-à-dire plus la zone ou lobe dans laquelle elle émet et/ou reçoit est étroite. Inversement, plus l'antenne est courte, plus la résolution est faible.
Cependant, le principe du SAR est de pouvoir avoir une résolution identique à celle d'une immense antenne malgré la petite taille de l'antenne 1. Ainsi, s'il est vrai que le lobe du SAR 1 est de la forme de celui référencé par 4, l'addition corrigée des signaux sur l'ensemble des positions du SAR 1 au-dessus de l'objet 6 à observer permet d'obtenir un lobe total 5 plus étroit, qui correspond à celui de la grande antenne 2.
Le principe du traitement du signal du SAR se fonde sur une compensation du retard d'observation de l'objet 6 entre les différentes positions du SAR 1 sur la trajectoire 3.
Ainsi, dans le principe général représenté à la figure 2, on considère une paire d'instruments d'observation formée d'un émetteur 1a et d'un récepteur 1b, l'émetteur 1a et le récepteur 1b étant éventuellement confondus en un SAR 1 comme sur la figure 1. En effet, la figure 2 montre qu'un émetteur 1 a et un récepteur 1b placés sensiblement dans un même tube virtuel autour d'un astre sont équivalents, du point de vue du traitement du signal, à un émetteur-récepteur 1 unique placé en position médiane des positions des instruments 1a et 1b selon les axes X et Y..
L'émetteur 1a, tout au long de son trajet, envoie une succession de signaux en direction de l'objet 6. Après réflexion au sol, les échantillons sont reçus le récepteur 1b.
Les échantillons de signal reçus sont alors ajoutés entre eux en mode complexe. Cette addition s'effectue après que chaque signal a reçu une avance temporelle. L'avance temporelle correspond au supplément de temps de chaque double trajet (puisqu'il y a un aller-retour entre l'émission et la réception du signal) référencé par 9 sur la figure 1, par rapport au double trajet référencé par 8 sur la figure 1. Les trajets 7 représentent la distance du SAR 1 à la cible 6. Le double trajet spécifique 8 correspond au trajet entre le point milieu particulier 18, entre l'émetteur et le récepteur sur la trajectoire 3, et la cible 6.
L'avance temporelle est effectuée au moment milieu entre l'émission de l'échantillon et sa réception pour le SAR 1 placé en 18. La longueur de l'antenne synthétique est référencée par 13 sur la figure 1.
Par ailleurs, sur un plan théorique, on sait que N instruments SAR répartis le long de l'orbite permettent d'obtenir l'équivalent d'un seul SAR. On connait par exemple le dispositif d'interférométrie radar décrit dans WO 99/58997, dans lequel une constellation de satellites est composée d'un satellite émetteur et de satellites récepteurs visant la zone illuminée par le satellite émetteur. Il y a en effet addition cohérente des signaux lors de l'observation successive des SAR. Le bénéfice peut être sur le plan énergétique (rapport signal à bruit) ou sur le plan du facteur de mérite (on ne peut pas cumuler les deux bénéfices). Mais dans le deuxième cas, cela s'accompagne de tellement fortes contraintes sur le contrôle mutuel des positions que cela n'est pratiquement réalisable qu'en accolant les instruments au sein d'un même corps, et encore avec une forte limite sur N.
La figure 1 montre en effet, qu'il existe ce que l'homme du métier appelle des ambiguïtés, dont on a représenté ici deux lobes 50 et 51, qui s'étendent sur les côtés du lobe 5 de détection de l'antenne synthétique. Si elles ne sont pas éliminées d'une façon ou une autre, ces ambiguïtés engendrent une perturbation du signal principal d'observation.

Les directions des ambiguïtés sont connues. Pour une antenne synthétique normalement échantillonnée à V/PRF, les directions ambiguës sont tournées, par rapport à la verticale, de k λ PRF/2V où k est un nombre entier, V est la vitesse de déplacement du SAR et où PRF est la fréquence d'échantillonnage.

Les directions des ambiguïtés déterminent la taille minimale du SAR 1. En effet, la taille du SAR est déterminée de sorte que le lobe de détection de l'antenne réelle 4 n'englobe pas la première ambiguïté 50, afin de ne pas perturber le signal de réception. Ce qui conduit à avoir une longueur d'antenne réelle au moins supérieure à 2V/PRF (au moins deux longueurs d'échantillonnage).

Cependant, la surface d'antenne est un élément clef de performance d'un SAR spatial et de sa complexité.

L'homme du métier sait que l'aire d'antenne et la puissance sont les contraintes principales de dimensionnement des SAR. Ces deux contraintes limitent le ratio 'fauchée sur résolution', qui est le critère clef et qui est dénommé le facteur de mérite.

Le dimensionnement critique du SAR est celui qui maximise le facteur de mérite pour une aire d'antenne donnée. Aller au-delà engendre une aire d'antenne beaucoup plus forte (+100%), pour un gain de facteur de mérite relativement faible (50%). Par contre, le facteur de mérite perd beaucoup de sa valeur (-75%) par rapport à l'économie sur la surface d'antenne (-30%) si on passe en dessous du dimensionnement critique.

Le facteur de mérite a une valeur de 10 000 à la taille critique, pour une incidence à la cible 6 d'une valeur de 50° à 60°.

PRESENTATION DE L'INVENTION.

Le but de l'invention est de proposer plusieurs SAR sur une même trajectoire.

L'invention propose ainsi l'addition de plusieurs SAR, sans avoir de contraintes dures sur la position des SAR entre eux.

Un autre but de l'invention est de diminuer les contraintes sur la puissance et sur l'aire d'antenne en les diluant sur une pluralité d'antennes. Il est en effet techniquement plus facile de construire des antennes plus petites.

Un autre but de l'invention est supprimer la limite sur le facteur de mérite et de multiplier le facteur de mérite atteignable pour une aire d'antenne donnée.

L'invention propose cette répartition sur des satellites distincts grâce, entre autres, à un choix de forme d'onde qui contourne les contraintes de positionnement.

De ce fait, il devient possible à la fois de répartir les contraintes d'antenne technique de surface d'antenne sur N objets plus petits et d'augmenter par N le facteur de mérite.

A cet effet, l'invention propose un procédé selon la revendication 1.

L'invention concerne également un ensemble d'instruments permettant la mise en oeuvre du procédé décrit.

L'invention est avantageusement complétée par les caractéristiques suivantes, prises seules ou en une quelconque de leur combinaison techniquement possible :

- plusieurs paires utilisent un même émetteur ;
- les échantillons des radars sont émis de manière périodique et en ce que entre deux positions du point milieu d'une paire donnée, les positions étant prises aux moments milieux entre émission et réception de l'échantillon, correspondant à deux échantillons successifs pour une même paire, d'autres positions de points milieux correspondant à des échantillons d'autres paires se trouvent répartie de manière périodique ;
- on asservit la période de répétition des échantillons de l'émetteur à (2K+1)V/2D, où V est la vitesse linéaire de déplacement dans le repère local, K est un entier quelconque et D est la mesure de la distance entre deux points milieux de deux paires ;
- on établit la mesure D à l'aide d'un système de télémétrie directe entre les deux récepteurs des deux paires considérées ;
- pour un groupe d'au moins deux paires, le signal est émis et reçu de manière continue sur au moins une partie du tronçon, et comporte une fonction d'autocorrélation étalée en temps et en fréquence et à bas niveau par rapport au pic central ;
- on module le signal en phase entre Pi et -Pi selon une série binaire aléatoire, le signal étant une fréquence pure ;
- on utilise un signal continu périodique avec la même série de signal pour toutes les paires du groupe et une période sensiblement identique, et en ce que entre les deux positions du point milieu d'une même paire correspondant à deux émissions/réceptions successives d'un même élément de la série du signal continu se trouvent répartis aléatoirement les points milieux (N') des autres paires correspondant à l'émission/réception du même élément de la série ;
- la longueur du tronçon est un multiple de la distance entre les deux positions du point milieu d'une même paire correspondant à deux émissions/réceptions successives d'un même élément de la série du signal ;
- on utilise pour le signal continu des formes d'onde décorrélées entre les paires ;
- on utilise plusieurs émetteurs, les paires partageant un même émetteur formant un même groupe, et en ce que les signaux de groupes distincts sont décorrélés d'un groupe à l'autre ;

- on utilise pour le signal continu des formes d'onde décorrélées entre les paires.

De plus, l'invention concerne également l'ensemble d'instruments permettant de mettre en oeuvre le procédé selon l'invention.

Cet ensemble est avantageusement complété par le fait que les instruments sont portés par des satellites autour d'un astre.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente une vue schématique du fonctionnement d'un SAR selon l'état de la technique ;
- la figure 2, déjà commentée, représente une vue schématique de l'équivalent d'un émetteur et d'un récepteur à un SAR émetteur-récepteur ;
- la figure 3 est une représentation schématique d'une formation de N SAR ;
- la figure 4 est une représentation schématique du principe général de la superposition des SAR selon deux directions ;
- les figures 5A et 5B sont des représentations schématiques de principe de fonctionnement d'un premier mode de réalisation de l'invention, qui constitue une amélioration de ce qui est représenté à la figure 4 ;
- La figure 6 représente la fonction d'ambiguïté classique d'une forme d'onde impulsionnelle ;
- La figure 7A représente la fonction d'ambiguïté classique d'une forme d'onde à spectre étalé ;
- La figure 7B représente la fonction d'ambiguïté d'une forme d'onde périodique à spectre étalé ;
- la figure 8 représente une déviation de phase par rapport à la connaissance du relief ;
- la figure 9 représente un train de N satellites (N-1 récepteurs seulement) ; et
- la figure 10 montre schématiquement la répartition de N' SAR dans un tronçon de cohérence.

DESCRIPTION DETAILLEE DE L'INVENTION.

Les différents modes de réalisation sont tous basés sur un vol N SAR sur un même arc orbital tel que vu du sol et un cas particulier est lorsque les N SAR sont en visibilité, un seul étant en émission.

Les N SAR volent sur le même arc orbital autour de la terre. Ceci signifie que les SAR sont généralement dans des plans orbitaux différents à cause de la rotation de la terre sur elle même entre les passages des différents SAR. Cependant, le retard de temps dû à ce phénomène est inférieur à ce qui pourrait causer une décorrélation temporelle de la rétrodiffusion. Dans la suite de la description, les SAR ne sont pas tous en visibilité, malgré le fait qu'un plus grand nombre de satellites en visibilité permet des configurations multistatiques, où un seul SAR transmet, et où tous les autres reçoivent.

Dans la présente description, on rappellera tout d'abord les contraintes s'appliquant dans le SAR standard à l'aire d'antenne minimale et au facteur de mérite maximum (rapport entre la fauchée et la résolution d'azimut). Différents avantages d'un train de SAR sont ensuite présentés en fonction de l'affectation d'espacement, des contraintes acceptables pour la conservation de l'information (sur et le long d'une trajectoire), de la connaissance du terrain et des formes d'ondes considérées.

On rappelle que la fauchée est la surface balayée sur la surface du sol par un satellite de détection. On rappelle également que la résolution d'azimut est l'empreinte au sol le long du vecteur vitesse du faisceau formé par l'antenne synthétique. (C'est-à-dire la mise bout à bout des différentes positions de l'antenne réelle entre l'instant ou le faisceau réel commence à voir la cible et l'instant où il cesse de la voir.) L'antenne synthétique est donc d'autant plus longue (et la résolution azimut bonne) que le faisceau réel est large et l'antenne réelle courte

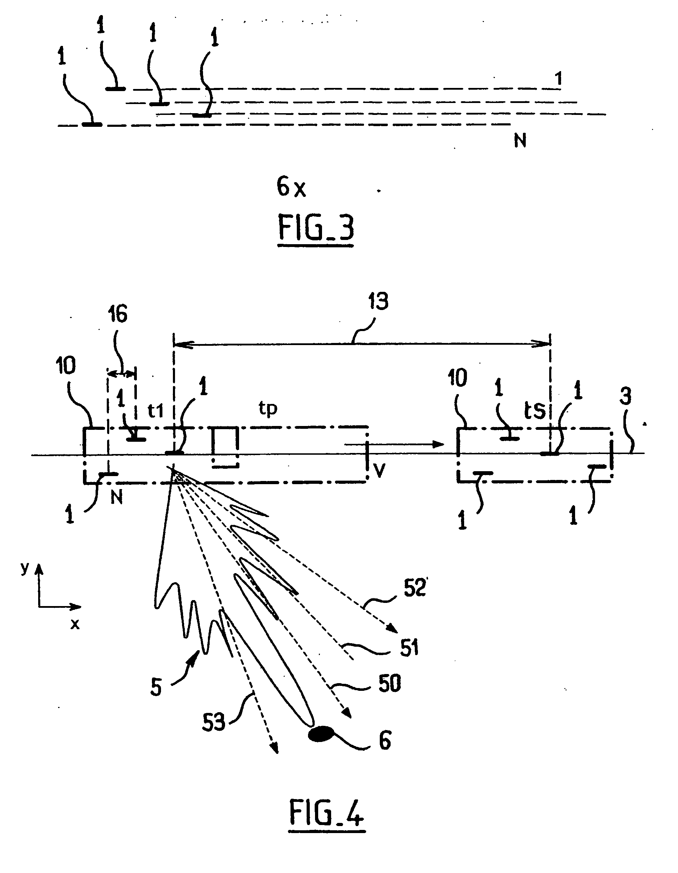

Tous les modes de réalisation mettent en oeuvre une combinaison cohérente des N SAR et procurent au moins un avantage d'addition d'énergie. La figure 3 montre ainsi que l'on superpose N SAR 1 pour l'observation d'un même objet ou pixel 6.

1) Un premier mode de réalisation possible de trains maintient inchangée l'aire d'antenne minimale de chaque SAR et procure un avantage du facteur N qui s'applique, selon le cas, au SNR (« signal to noise ratio » selon la terminologie anglo-saxonne généralement utilisée, ou « signal sur bruit » en français), et/ou au niveau d'ambiguïté, au facteur de mérite, ou au temps d'intégration. La contrainte de formation principale est la largeur du tube contenant les trajectoires de satellites sur un référentiel terrestre. La multiplication par N de la surface totale d'antenne est l'autre contrepartie de ces avantages, même si l'aire d'antenne d'émission peut être maintenue inchangée lorsqu'un SAR unique émet.

2) Un deuxième mode de réalisation possible de trains permet la répartition d'une aire d'antenne minimale totale inchangée dans N antennes élémentaires plus petites, avec la multiplication par N du facteur de mérite.

Cependant, le deuxième mode de réalisation possible engendre des contraintes d'orbites supplémentaires, très difficilement surmontables sauf pour N= 2 où une solution est donnée plus loin.

C'est pourquoi on prévoit un troisième mode de réalisation par l'introduction de formes d'ondes nouvelles et appropriées. Ces formes suppriment la majeure partie des contraintes d'orbites supplémentaires introduites par le deuxième mode de réalisation et autorise l'extension de ce second mode à une valeur quelconque de N.

Un train de N SAR en visibilité facilite la métrologie de la formation (DGPS) et le rendement énergétique global est accru de N car avec un SAR en émission unique, les mêmes performances sont obtenues. De plus, les contraintes d'orbites sont diminuées de 2.

En tant que partie de ces applications, chaque mode de réalisation peut éliminer le problème des tailles d'antennes importantes pour une mission SAR en bande P ou à très haute altitude, d'autant plus que dans ce cas, les contraintes de largeur de tube de formation de SAR (fonction de $\lambda$ et de l'altitude) sont réduites.

La présente description est préférentiellement dédiée aux instruments sur orbite autour d'un astre. L'invention est applicable également aux instruments dans le domaine de l'aéronautique.

PREMIER MODE DE REALISATION.

PRINCIPE DE FONCTIONNEMENT

Le premier mode de réalisation de l'invention considère un train de N SAR monostatiques conforme à ce qui est représenté sur la figure 4.

Il considère une séparation aléatoire des SAR et une réduction d'ambiguïté.

La figure 4 montre que la formation générale de la figure 3 peut être équivalente à un grand SAR 10 regroupant N SAR 1.

Les N satellites SAR 1 volent sur une même trajectoire orbitale au-dessus d'un point 6 au sol donné à des instants différents $t_p$.

Ils fournissent N antennes synthétiques identiques focalisées sur le point 6 à des instants différents. L'addition des N passages de la même antenne (synthétique) procure une amélioration de N du bilan d'énergie et du SNR.

En effet, les images reçues par les N SAR 1 sont additionnées. Par conséquent, l'image résultante a une énergie égale à la somme des énergies de chaque image.

On effectue pour comprendre une modélisation sous la forme d'un réseau d'antennes de N éléments selon la direction X, comme cela est fait sur la figure 4.

On effectue maintenant un examen plus détaillé pour améliorer la compréhension et découvrir les autres propriétés et avantages des trains SAR.

On utilise la représentation statique d'une sortie d'antennes synthétiques comme l'addition sur la trajectoire 3 de S échantillons de signaux identiques reçus par l'antenne réelle dans S positions sur l'arc orbital selon la direction X, et précédemment corrigés par rapport à la variation de distance aller/retour sur le pixel traité ou cible 6. Cette correction équivaut à un enroulement circulaire de l'arc orbital autour du pixel 6.

L'addition des N antennes synthétiques peut en conséquence être considérée comme une première addition de N échantillons provenant de SAR 1 différents et précédemment corrigés, puis d'une seconde addition des échantillons composites sur l'arc orbital 3.

L'échantillon corrigé composite est équivalent à l'échantillon fourni par un simple réseau d'antennes dont les N éléments sont les antennes des N SAR situés aux N points d'échantillonnage.

Grâce à la correction du traitement, le réseau s'adapte automatiquement directement et donne un faisceau 5 dirigé vers la cible 6.

Pour cette équivalence de réseau, on considère que le signal transmis par un élément n'est pas reçu par un autre élément. On peut considérer également que le réseau ne fonctionne qu'en transmission et à double fréquence, ce qui est l'hypothèse faite lorsqu'on représente un SAR par son antenne synthétique. La longueur de l'antenne synthétique est référencée par 13 sur la figure 4.

De plus, la signification d'un motif de réseau ainsi que ses ambiguïtés vus par la cible 6 ne s'applique que si les éléments du réseau transmettent les mêmes échantillons de signal. En d'autres termes, la séparation entre les éléments du réseau devrait être égale à la distance qui sépare deux SAR 1 qui transmettent le même échantillon en même temps ou à des temps différents. La distance entre deux éléments est appelée distance de synchronisation. Elle est référencée par 16 sur la figure 4.

Dans le cas d'une forme d'onde périodique avec une faible longueur de récurrence (la longueur de récurrence est égale à la vitesse V multipliée par la période) le long de l'orbite par rapport à l'antenne synthétique (par exemple forme d'onde impulsionnelle classique), on dispose d'une grande liberté pour sélectionner le réseau à condition qu'à la fin de l'addition, aucun des NS échantillons n'ait été oublié et aucun n'àit été compté plusieurs fois (aucune amélioration n'est attendue par plusieurs additions du même échantillon de bruit).

La géométrie du réseau peut même varier le long de l'arc et on peut même oublier le modèle SAR classique avec une antenne se déplaçant régulièrement.

Lorsqu'un élément d'un long réseau mobile atteint l'extrémité de l'antenne synthétique (appelée aussi le tronçon dans la suite de la description) il est nécessaire de le remplacer par un nouveau entrant dans l'arc par l'autre extrémité et le vol du réseau peut continuer avec la nouvelle géométrie.

À la fin, tous les éléments sont passés par les positions d'échantillonnage le long de l'antenne synthétique et pas plus. Ce saut dans la géométrie du réseau est nécessaire pour représenter la réalité de la combinaison de signal et le traitement, et il ne modifie pas la compréhension que l'on obtient à partir d'une géométrie de réseau fixe quelconque. En fait, le décalage arrière d'un élément selon une distance égale à la longueur de l'antenne synthétique ne modifie pas le parcours aller et retour entre l'élément et le pixel traité en raison de la correction SAR, et modifie ceux en relation avec les autres pixels et les ambiguïtés d'un multiple de $\lambda$.

Cependant, ce saut exige que la longueur de l'antenne synthétique soit d'une longueur égale à une longueur de synchronisation, et soit par conséquent un multiple de la longueur de récurrence le long de l'orbite.

Cependant, dans le cas du premier mode de réalisation représenté à la figure 4, on remarque que le lobe 5 résultant de la superposition des signaux issus des SAR 1 est de forme quelconque lorsque les distances entre les N SAR sont quelconques. Ainsi, des ambiguïtés 50, 51, 52 et 53 sont situées dans des lobes secondaires et seront donc détectés.

On appelle « section » l'intervalle d'échantillonnage d'un SAR p0, et PRF la fréquence de répétition d'impulsion, ou la fréquence d'échantillonnage.

La longueur de la section est égale à V/PRF. Comme indiqué précédemment la longueur de l'antenne fait au moins deux sections

Puisque les N trains d'impulsions ne sont pas synchronisés dans la section, on trouve dans une section une répartition de N-1 autres échantillons effectuée ultérieurement ou précédemment avec un retard ($t_{p0}-t_p$). On considère pour un instant, un modèle de réseau avec les N éléments d'une même section. C'est ce que montre la figure 4.

On rappelle que pour une antenne synthétique normalement échantillonnée à V/PRF, les directions ambiguës sont tournées de

k $\lambda$ PRF/2V par rapport à la verticale.

Ici, l'ambiguïté k est reçue par un réseau de N éléments en fonction d'une différence de distance A/R entre les éléments consécutifs, qui est une partie de k$\lambda$, car l'espacement des éléments est une partie de V/PRF.

La distribution des séparations entre les éléments est aléatoire et les N contributions de chaque ambiguïté sont additionnées de façon non cohérente, tandis que les N contributions du pixel traité sont additionnées de façon cohérente. Avec l'amélioration de N du SNR, il existe une amélioration de N de la protection contre l'ambiguïté.

DEUXIEME MODE DE REALISATION

Le deuxième mode de réalisation a pour objet de profiter de la réduction du niveau des ambiguïtés pour autoriser leur entrée dans les faisceaux de détection, et ainsi permettre une amélioration du facteur de mérite en même temps qu'une diminution de la surface de l'antenne. On cherche dans ce qui suit à atteindre le maximum, c'est-à-dire un facteur N sur les mérites et la taille d'antenne..

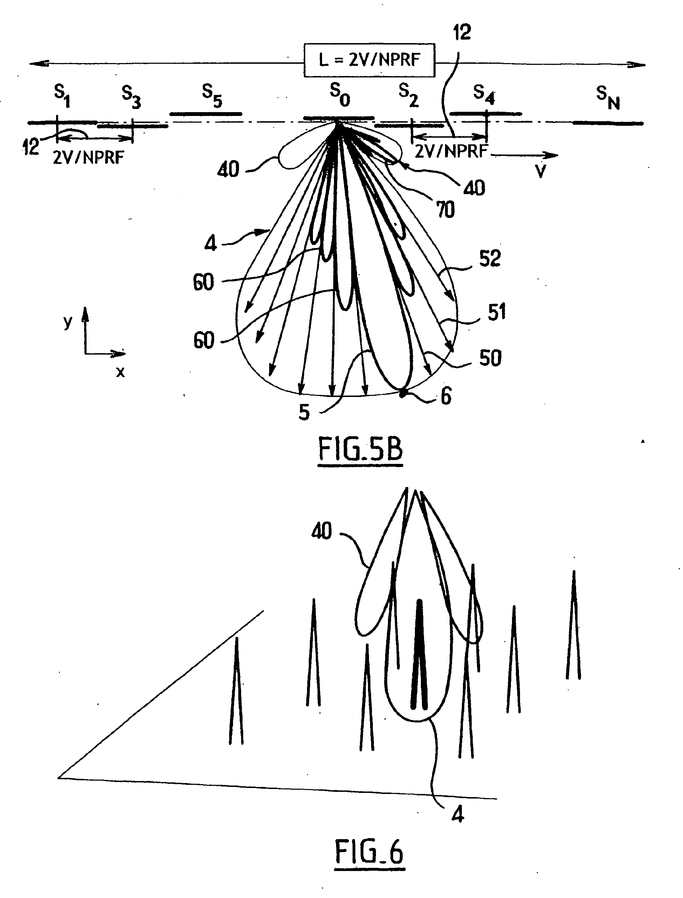

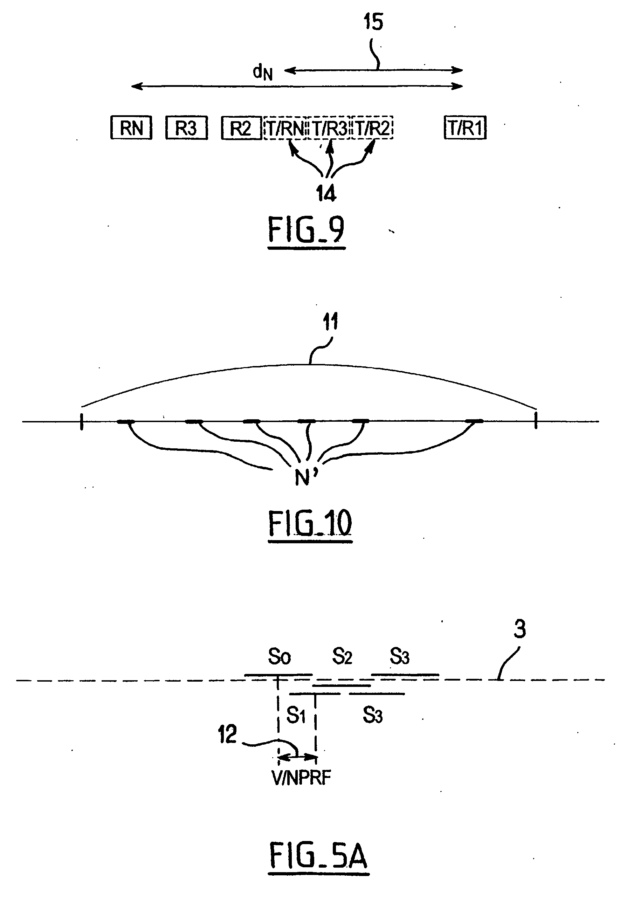

La figure 5A et 5B montrent que l'on peut tout d'abord effectuer un espacement précis de SAR (modulo V/PRF).

Le deuxième mode de réalisation a comme principal avantage une multiplication du facteur de mérite et une dilution de la contrainte de surface d'antenne sur l'ensemble des N antennes rendues N fois plus petites.

On s'attache tout d'abord à expliquer le principe du deuxième mode de réalisation de l'invention par la compréhension de l'échantillonnage d'antenne synthétique.

Sur la figure 5A, la distance 12 entre les SAR dans le réseau équivalent est maintenant fixe et égal à V/NPRF, c'est-à-dire que l'espacement réel entre un satellite et chacun des p autres au moment d'émission d'un même échantillon de signal (et donc pas au même instant car les SAR ne sont pas forcément synchronisés) est égal à

$$K\ V/PRF + p\ V/NPRF$$

avec K indéterminé et p un nombre entier,

On peut aussi dire que la superposition de N échantillonnages constitue une antenne synthétique unique dont l'intervalle d'échantillonnage est réduit de N. L'espacement des ambiguïtés est donc accru par N et la longueur d'antenne réelle 1 peut en conséquence être réduite de N sans impact sur l'ambiguïté, permettant ainsi d'ameliorer la résolution par N.

On peut également comprendre le principe du deuxième mode de réalisation en s'attachant à la compréhension du réseau d'antennes.

Cela consiste ainsi à observer que l'ambiguïté k est reçue N fois selon une répartition de déviation de portée de :

$$\text{Déviation} = 2.p \; V/NPRF. \; k \; \lambda \; PRF/2V,$$

soit

$$\text{Déviation} = pk\lambda/N$$

avec p prenant une valeur entière comprise entre 0 et N-1.

Le résultat de la sommation complexe est nul sauf pour k multiple de N, où l'addition est cohérente.

En conséquence, avec une réduction de N de la longueur d'antenne et une augmentation par N à la fois de la largeur du faisceau 4 et de la longueur de l'antenne synthétique, on obtient la même configuration d'ambiguïté. Cependant, la résolution est améliorée de N avec une fauchée inchangée, puisque le PRF est inchangé.

Sans réduction de taille d'antenne, il y a réduction d'ambiguïté, puisque le nombre d'ambiguïtés est divisé par N.

Cette réduction est plus grande que dans le cas d'une séparation aléatoire du premier mode de réalisation. En effet, plutôt que d'avoir une réduction par N de chaque ambiguïté, on a une complète suppression des ambiguïtés près du lobe principal 5 de l'antenne qui dominent normalement le bilan d'ambiguïté.

On a de plus une réduction par N du reste de l'énergie ambiguë sur les lobes secondaires.

On doit choisir entre une amélioration du facteur de mérite et une protection contre l'ambiguïté, car c'est le gain de protection d'ambiguïté offert par le réseau qui permet d'être échangé contre un élargissement du faisceau de détection et un gain de facteur de mérite.

Une troisième et dernière façon de comprendre le fonctionnement du deuxième mode de réalisation est de s'attacher à une compréhension du mode projecteur (ou « Spotlight » selon la terminologie anglo-saxonne généralement utilisée par l'homme du métier) automatique.

Nous pouvons disposer d'une troisième compréhension. Pour cela, il est nécessaire de considérer un nouveau modèle de réseau d'antennes dérivé du précédent par le remplacement des échantillons impairs par l'échantillon du même SAR effectué à la section précédente. On dispose d'un nouveau réseau augmenté d'un facteur 2, les éléments consécutifs sont maintenant espacés de 2V/NPRF.

Avec une réduction de la longueur d'antenne de N, le réseau est équivalent à une antenne continue unique avec une longueur L égale à 2V/PRF comme représenté à la figure 5B, dont le faisceau est automatiquement asservi vers le pixel traité.

L'asservissement assure un temps d'illumination et en conséquence une résolution équivalente à une antenne N fois plus courte. La PRF et en conséquence la fauchée sont inchangés.

Ceci est équivalent à un mode projecteur, bien connu de l'homme du métier, à l'exception du fait que le fait de diriger le faisceau de façon à augmenter le temps d'exposition de la cible est effectué ici automatiquement grâce à la correction SAR et en permanence sur tous les pixels sur le trajet (aucune limitation de longueur d'image comme pour un projecteur standard quelconque).

Comme le montre la figure 5B, on rappelle que la forme du réseau d'antenne fournit des zéros dans les directions d'ambiguïté de rang non multiple de N (au niveau des ambiguïtés 50, 51 et 52 par exemple), alors que ces ambiguïtés sont amenées dans le lobe 4 de l'antenne réelle à cause de la réduction de sa longueur.

Cependant, il faut noter que les ambiguïtés sont toujours présentes, notamment dans les lobes fantômes 70. Elles sont espacées par des déviations angulaires $\lambda$ NPRF/2V et modulés par le diagramme de l'antenne réelle formé du lobe 4 et de ses lobes secondaires 40. Le résultat d'ambiguïté est équivalent à ce qui a déjà été présenté précédemment : seules les ambiguïtés d'un multiple de N sont présentes et donnent un niveau total inchangé quand le diagramme d'antenne réel est élargi d'un facteur N.

Toute différence dans l'espacement des SAR affecte la qualité d'annulation des ambiguïtés autres que les kN et engendre une ambiguïté supplémentaire par rapport à la protection habituelle. Ceci donne une contrainte sur la formation des SAR, qui est décrite plus tard dans la présente description.

VARIANTE DU DEUXIEME MODE DE REALISATION

Selon une variante du deuxième mode de réalisation, plutôt que de réduire la longueur d'antenne on peut également considérer un réseau équivalent étendu N fois sur 2N sections. Ceci permettrait d'obtenir une antenne continue N fois plus longue que l'antenne réelle, permettant une réduction de PRF d'un facteur N, une augmentation de la fauchée de N et une réduction de la hauteur d'antenne d'un facteur N pour une condition d'ambiguïté de portée égale. Le résultat est le même pour ce qui concerne le facteur de mérite (multiplié par N) et la taille d'antenne (divisée par N)

La réduction de N de la taille d'antenne réduit de $N^2$ le niveau de l'échantillon élémentaire recueilli par chaque antenne à la fois pour le signal utile de la cible et sa contribution ambiguë. Malgré l'amélioration par N du SNR, ce dernier est toujours N fois plus faible que celui qui est disponible sur chaque SAR avec la taille d'antenne et le facteur de mérite d'origine.

On peut alors résumer le concept et énoncer qu'un entrelacement régulier de l'échantillonnage des N SAR permet simultanément :

- une amélioration de N du facteur de mérite soit par la résolution soit par la fauchée, soit par un panachage des deux.
- une réduction de N de la taille d'antenne ou en d'autres termes, une répartition d'une aire d'antenne totale minimale inchangée en N plus petites parties.
- une dégradation de N du SNR
- une augmentation de N du volume de données de SAR, entièrement justifiée par l'augmentation du facteur de mérite.

On notera que la seule autre manière d'augmenter le facteur de mérite doit être d'avoir N antennes T/R indépendantes formant l'image de N fauchées juxtaposées et nécessitant une aire d'antenne totale N fois plus grande.

TROISIEME MODE DE REALISATION

Une autre façon de réaliser l'invention est de considérer une forme d'onde de spectre étalé. Ceci permet une multiplication du facteur de mérite et une répartition de contrainte d'aire d'antenne.

On verra ultérieurement que l'approche d'espacement de SAR précis selon le deuxième mode de réalisation apporte des contraintes importantes sur la formation.

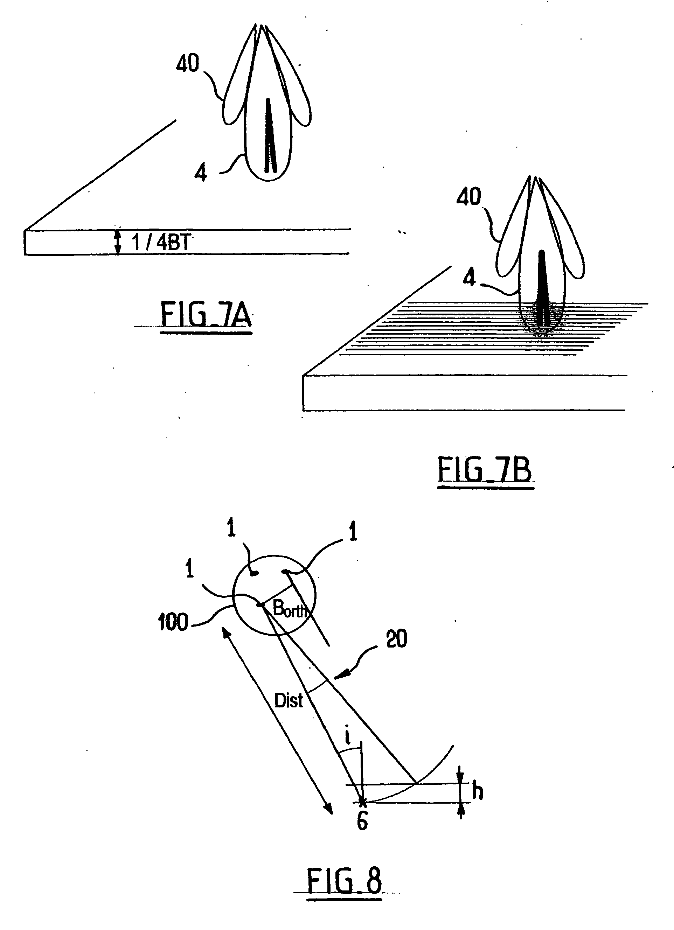

Les figures 6 et 7A et 7B représentent une comparaison des fonctions d'auto-corrélation (temps/fréquences) que l'on peut aussi appeler fonctions d'ambiguïté distance/doppler des ondes impulsionnelles et des ondes que l'on considère dans le troisième mode de réalisation.

La figure 6 représente la fonction d'auto-corrélation classique d'une onde impulsionnelle. Les pics de corrélation du spectre sont répartis régulièrement. Pour éviter les mauvaises réceptions, le lobe principal de détection 4 doit uniquement recouvrir le pic.

Comme le montre la figure 7A, la fonction d'ambiguïté de Doppler/portée avec un spectre étalé a l'apparence typique d'un pic d'ambiguïté, avec une pointe étroite entourée par un petit piédestal d'une épaisseur de 1/4BT, où B est la largeur de bande, T est le temps d'intégration.

Au contraire, la figure 6 montre que la même énergie d'ambiguïté est concentrée sur une grille de pics séparés de façon précise sans piédestal dans le cas d'un signal impulsionnel. En étalé, l'énergie ambiguë AE influant sur un pixel donné est la somme de l'énergie sur chaque pixel multipliée par 1/4BT (B= largeur de bande, T= temps d'intégration).

On peut donc considérer que les pixels polluants sont seulement ceux qui sont présents dans le lobe principal 4. Ce nombre est égal à

$$n = (T V /r_{az})(S / r_{rg}) = (T V /r_{az}) (2 s B \sin (i)/C)$$

Avec :
V = vitesse au sol ; $r_{az}$ = résolution de l'azimut ; $r_{rg}$ = résolution de portée = C/(2 sin(i) B) et S = la fauchée.

On a alors

$$AE = (S/r_{az})(V\sin(i)/2C).$$

On remarque ainsi que les contraintes apportées par l'ambiguïté sur le facteur de mérite (S/Raz) et l'aire d'antenne minimale sont pratiquement les mêmes que pour les formes d'ondes d'impulsions représentées à la figure 6. L'énergie ambiguë est proportionnelle à l'ouverture de faisceau et en conséquence, à l'inverse de la taille d'antenne, comme pour la forme impulsionnelle. La différence principale est que tous les autres pixels et principalement ceux situés dans le lobe principal contribuent à l'ambiguïté qui pollue un pixel donné.

La figure 7B montre la même forme de spectre, mais elle apparaît lorsque le signal d'origine est périodique de période Te. L'énergie du piédestal est la même mais est concentrée sur un peigne de lignes espacées d'une distance égale à 1/Te.

Si les N SAR utilisent des formes d'ondes différentes avec des fonctions de corrélation de temps/fréquence différentes, l'addition est cohérente pour les N contributions issues du pixel traité (ou corrélés) alors qu'elle est non cohérente pour les N contributions provenant de l'un quelconque des autres pixels.

En conséquence, la protection contre l'ambiguïté est améliorée de N. Alternativement, l'aire d'antenne peut être réduite de N pour une protection inchangée contre l'ambiguïté, et pour un avantage de N sur la résolution ou sur la fauchée, et de toute façon sur le facteur de mérite.

Si N' parmi les N SAR utilisent une même forme d'onde et que les N' formes d'onde sont synchronisées sur l'arc orbital (un même échantillon pour une localisation donnée mais pour un temps différent), les N éléments du modèle de réseau sont superposés. Les N' contributions des pixels traités et les N' contributions de chacun des autres pixels sont additionnées de façon cohérente.

La combinaison des N' SAR apporte toujours une amélioration du SNR mais aucune amélioration de l'ambiguïté.

En conséquence, il n'y a aucun moyen d'obtenir un avantage sur le facteur de mérite qui puisse être réalisé seulement entre l'un quelconque des N' SAR ou leur combinaison avec les N-N' autres SAR. L'amélioration de facteur de mérite maximale est de N-N'.

Si les N' SAR ne sont pas synchronisés sur l'arc orbital, on considère le modèle de réseau dont les N' éléments sont séparés par les distances de synchronisation et voient par conséquent une forme d'onde synchronisée. Ce réseau peut être plus grand que l'antenne synthétique. Pour réaliser la combinaison de N SAR, on considère ce réseau volant passant le long de l'antenne synthétique et on additionne les signaux des éléments seulement pendant le temps où ils sont présents dans l'antenne synthétique. Cette durée de survol est divisée en séquences temporelles $s_i$ délimitées par l'entrée ou la sortie d'un élément.

Chaque séquence temporelle est associée à un réseau entièrement à l'intérieur de l'antenne synthétique comme représenté sur la figure 10 et qui est une portion du réseau N'. Toutes les séquences temporelles comportant un réseau d'éléments unique contribuent à la combinaison de N SAR avec un signal dont la forme d'onde n'est corrélée avec aucun des autres N SAR.

On considère la séquence temporelle $S_{i0}$ associée au réseau le plus court de plus d'un élément. Si la longueur du réseau est une partie $1/p_{i0}$ de l'antenne synthétique, les contributions ambiguës de ses $n_{i0}$ éléments ne sont pas additionnées de façon cohérente aussi longtemps qu'elles viennent de pixels décalés de plus de $p_{i0}$ pixel azimut. Pour obtenir la même amélioration sur l'ambiguïté ou le facteur de mérite qu'avec N formes d'ondes non corrélées, il est nécessaire de satisfaire l'une ou l'autre des conditions suivantes :

- $p_{i0}$ très proche de 1. Ceci signifie que la distance de synchronisation entre deux éléments consécutifs doit être à peu près de la même longueur que l'antenne synthétique. Ceci est en fait équivalent au cas observé précédemment, où les formes d'ondes vues le long des antennes synthétiques sont toutes distinctes.

- les N' formes d'ondes sont périodiques et désynchronisées de façon aléatoire, la longueur de récurrence de l'onde étant une fraction entière 1/p de la longueur de l'antenne synthétique. Dans ce cas, l'énergie ambiguë est concentrée dans un peigne de lignes Doppler espacées de p pixels d'azimut comme représenté à la figure 7B. Le réseau N' est réparti aléatoirement le long de la récurrence référencée par 11 égale à V multipliée par la période à la figure 10 et produit une sommation non cohérente entre ces éléments pour des déviations supérieures à p pixels, c'est-à-dire pour toute l'énergie ambiguë. Puisque p est un entier, la même propriété du réseau N' peut être considérée tout au long de l'antenne synthétique, car un élément sortant peut être remplacé par le même élément lorsqu'il a été entré. Si p est non entier mais plus grand que 1, on peut obtenir le même avantage du facteur N' à condition que l'on restreigne la longueur synthétique à un multiple de la longueur de récurrence.

Ainsi, on a vu trois modes de réalisation possible. Deux des modes de réalisation utilisent des ondes impulsionnelles classiques. Le troisième mode de réalisation utilise un signal à spectre étalé.

On va maintenant décrire les différentes conditions pour la cohérence des signaux.

## CONDITIONS SUR LA COHERENCE DES SIGNAUX

Comme on l'a vu précédemment, certaines conditions sur la cohérence des signaux émis et reçus par les SAR doivent être vérifiées pour l'ensemble des modes de réalisation.

Ce qui va suivre s'applique pour l'ensemble des modes de réalisation de l'invention.

Il faut pouvoir connaître et commander la géométrie de la formation pour l'ensemble des modes de réalisation.

En effet, les N SAR ne volent pas exactement sur le même arc orbital dans un référentiel terrestre et ne respectent pas exactement l'affectation de position relative, s'il y a lieu, le long de l'arc orbital.

On suppose dans ce qui va suivre que les N trajectoire SAR sont réparties de façon aléatoire dans un tube d'une largeur de $\omega$ ($3\sigma$). La largeur du tube est référencée par 100 sur la figure 8.

Plusieurs sortes de trains de SAR peuvent être considérés.

On va maintenant décrire un premier exemple de mise en oeuvre de train de SAR orbital.

Les N satellite utilisent des orbites polaires réelles avec des paramètres identiques, à l'exception des noeuds ascendants et des anomalies qui ont des déviations $\Delta\Omega$ et $\Delta a$ et vérifient des relations particulières.

Ts et Te sont les périodes de rotation du satellite et de la terre respectivement. R est le rayon de la terre. On note a les anomalies de trajectoire. Pour une latitude L donnée, les' trajectoires sur une terre supposée sans rotation sont séparées de :

R Cos(L) $\Delta\Omega$.

Pendant le retard de temps Ts $\Delta a/(2\pi)$ entre les deux passages à la latitude L, la rotation de la terre à la latitude L est

-R Cos(L) Ts $\Delta a$/Te.

En conséquence, les deux satellites passent au-dessus du même point si Ts/Te = -$\Delta\Omega$/$\Delta a$.

On va maintenant décrire les conditions de base pour une addition de signaux cohérente.

Le vecteur formé par deux éléments du réseau équivalent considéré au milieu de l'antenne synthétique possède 3 composantes :

L'une se trouve le long du vecteur vitesse et est corrigée en termes de déviation de retard par rapport au pixel traité par la correction de traitement SAR.

L'une est le long de la ligne de visée.

La troisième est orthogonale à la fois au vecteur vitesse et à la ligne de visée et est appelée base interférométrique.

La seconde composante prise seule fournit une différence de phase entre les sorties d'antennes synthétiques communes sur une partie significative de la fauchée pouvant être facilement identifiée par moyennage et éliminée.

Cependant, l'effet de la base interférométrique doit être corrigé en premier.

Si la base interférométrique est trop grande, les échantillons provenant d'un même pixel ne sont pas tous cohérents, cette première condition de fonctionnement est celle de la InSAR (interférométrie transversale à la trace) et est présentée comme étant directement liée à la résolution de distance.. Dans ces conditions, les deux SAR doivent se situer dans l'ouverture 3dB de l'antenne équivalente constituée par la cellule de résolution distance.

Puisque les présents modes de réalisation ont pour but d'améliorer le SNR ou le facteur de mérite, on peut supposer qu'ils sont appliqués dans un contexte de résolution relativement bonne.

En conséquence, cette première contrainte ne limite pas réellement le domaine d'application des modes de réalisation. Par exemple, pour une résolution de 1m, une portée de 600km à une incidence de 20°, la base doit être plus petite que 10 km en bande X et 120 km en bande L.

Toutefois, à l'intérieur de cette limite grossière, la différence de phase entre deux contributions SAR issues du pixel traité varie sur la fauché et peut être corrigée à condition que le relief soit connu. La figure 8 fournit la sensibilité de différence de phase par rapport à la précision de connaissance du relief et à la base interférométrique.

Les corrections sont effectuées pour chacun des N SAR par rapport à une trajectoire de référence et virtuelle au centre du tube. Les bases interférométriques par rapport à cette trajectoire de référence sont aléatoires, avec une valeur moyenne nulle et un écart type égal à

$$(\omega / 6\sqrt{2})$$

Après la correction, les N contributions d'un pixel donné, dont la connaissance d'altitude est h ($1\sigma$), ont une erreur de phase aléatoire résiduelle avec un écart type $\varepsilon$ donné par :

$$\varepsilon = \frac{4\pi h\omega}{6\sin(i)Dist\lambda\sqrt{2}}$$

où i l'angle entre la verticale et la direction du SAR à la cible représenté à la figure 8.

L'effet de cette déviation de phase sur le module de la sommation complexe de N contributions est :

$$(1/N)\ \Sigma\ \cos(\varepsilon_p) = e^{-\varepsilon^2/2}\ ,$$

En supposant que la connaissance du relief peut être facilement meilleure que +/-50 m ($3\sigma$) et les conditions du pire cas avec une faible distance à la cible (600 km), une faible incidence (20°), une petite longueur d'onde (bande X = 3 cm), la largeur de tube ($3\sigma$) doit être plus petite que 90m pour limiter à 0.5dB l'effet statistique sur la puissance. Ceci appartient à l'état de l'art du vol en formation.

L'erreur de connaissance $\delta B_{orth}$ sur la longueur de base interférométrique fournit une erreur de correction de phase

$$\frac{4\,\pi \delta B_{orth} h_{\max}}{\mathrm{Sin}(i)\ \mathrm{Dist}\ \lambda}\ ,$$

si $h_{max}$ est la dynamique de hauteur du terrain dans l'image. En supposant que $h_{max}$ est plus petit que 1000 m, cette erreur peut être rendue négligeable si $\delta B_{orth}$ est plus petit que 10 cm. Cette précision peut être facilement obtenue avec un GPS différentiel ou Doris.

On notera que les contraintes de vol sont ici calculées dans un pire cas. Le souci d'économie d'énergie ou de facteur de mérite s'applique plutôt pour une incidence élevée et une distance importante. Pour Dist = 1500 km et i = 50°, la largeur du tube devient 500m. Si le système fonctionne maintenant dans la bande L, la largeur est de 4000m.

Sur la figure 8, la déviation 20 de la phase sur le trajet A/R au pixel pour l'erreur h sur son altitude est donnée par la relation :

$$\text{Déviation angulaire} = \frac{4\pi B_{orth} h}{\sin(i)\lambda Dist}$$

On va maintenant analyser les conditions pour la réduction d'ambiguïté (forme d'onde Standard Std impulsionnelle), c'est à dire pour le premier mode de réalisation.

La réduction d'ambiguïté est fondée sur le fait que les N contributions de l'ambiguïté k ne sont pas cohérentes lorsque les contributions provenant du pixel traité sont rendues cohérentes par le traitement et les corrections interférométriques. Un espacement aléatoire le long du trajet introduit déjà un caractère aléatoire suffisant entre les trajets de contributions ambiguës et la largeur de tube n'importe pas. Il n'y a pas de contraintes de largeur de tube mais celles qui sont liées à la bonne correction interférométrique.

En ce qui concerne les conditions pour l'amélioration du facteur de mérite (toujours dans le cas d'une forme d'onde Std), on va d'abord analyser l'impact de l'erreur d'affectation sur la trajectoire.

Les échantillons des N SAR ne sont pas entrelacés régulièrement comme décrit au paragraphe sur le deuxième mode de réalisation.

L'écart type de phase des N contributions est $k\alpha$ quand l'écart type de l'erreur d'échantillonnage est de

$$(\alpha/2\pi)\ V/PRF.$$

L'annulation d'ambiguïté est perturbée, la sommation complexe des N contributions de l'ambiguïté k fournit une somme de N vecteurs régulièrement répartis en phase et dont le module (positif ou négatif) est aléatoire avec l'écart type $k\alpha$ (pour de petites valeurs de $k\alpha$) si 1 est le module de la contribution. La partie résiduelle de la puissance reçue de l'ambiguïté k est $Nk^2\alpha^2$.

La puissance sur le pixel traité est accrue de $N^2$, en conséquence, la protection résiduelle sur l'ambiguïté k est $k^2\alpha^2/N$.

Dans une conception non ambiguë standard, les deux premières ambiguïtés (vers l'avant et vers l'arrière) sont près des premiers zéros du faisceau lorsque l'antenne réelle se trouve au milieu de l'antenne synthétique.

On considère maintenant que le facteur de mérite est accru de N. Au milieu de l'antenne synthétique, il y a N-1 ambiguïtés vers l'avant et N-1 ambiguïtés vers l'arrière à l'intérieur de l'ouverture de faisceau (définie entre les deux premiers zéros).

Dans une position quelconque le long de l'antenne synthétique, seule la moitié de ces 2 (N-1) ambiguïtés sont présentes dans l'ouverture d'antenne de 3 dB. Le diagramme d'antenne divise par deux l'énergie ambiguë totale résiduelle des 2(N-1) ambiguïtés intégrée le long de l'arc orbital. La protection résiduelle totale contre ces 2(N-1) ambiguïtés est donc $(\alpha^2/N)(\Sigma k^2)$ la sommation ayant lieu pour k = 1 à N-1

Comme déjà mentionné plus haut dans le paragraphe sur la deuxième compréhension possible du deuxième mode de réalisation, le fait qu'une forme de réseau n'annule pas de l'ambiguïté engendrée dans la forme de l'antenne réelle quand le facteur de mérite est augmenté de N est une ambiguïté supplémentaire par rapport au SAR habituel. Pour ne pas affecter trop la protection requise contre l'habituelle ambiguïté Doppler, qui est typiquement autour de -25 dB, la protection résiduelle dans la forme du réseau devrait être meilleure que -30dB.

La contrainte augmente rapidement avec N et est déjà très stricte avec N=2. En fait, $\alpha$ doit être plus petit que 1/22 et la synchronisation de l'échantillonnage doit être meilleure qu'une partie sur 138 de l'intervalle d'échantillonnage ou de la moitié de la longueur d'antenne, c'est-à-dire de l'ordre du cm.

Pour le cas particulier de deux satellites, on décrira ultérieurement une solution basée sur le verrouillage de la PRF sur la mesure de la distance intermédiaire. Pour les autres cas, cette contrainte d'entrelacement régulier rend la réalisation très peu aisée.

On peut imaginer une pondération des éléments du réseau pour fournir une forme de réseau avec des lobes latéraux très bas et un autre type de réduction d'ambiguïté, moins sensible à l'espacement des SAR que l'approche par annulation. Cependant, avoir le même niveau de réduction demande un grand nombre d'éléments supplémentaires et donc de satellites, sans aucun bénéfice sur le facteur de mérite ou sur le SNR, puisque le faisceau du réseau est plus spatulé ou formé mais pas plus étroit.

Il nous faut maintenant étudier l'impact de la largeur du tube des trajectoires.

Si l'altitude de l'ambiguïté k est en fait celle qui est considérée pour la correction interférométrique sur le pixel traité, le tube de trajectoire ne modifie pas l'annulation d'ambiguïté décrite 'pour le premier mode de réalisation. Une déviation d'altitude $H_k$ introduit un écart de phase aléatoire de la valeur standard $\varepsilon_k$ sur chacune des N contributions avec :

$$\varepsilon_k = \frac{4\,\pi H_k \omega}{6\sqrt{2}\,\sin(i) Dist\lambda}$$

L'annulation complexe laisse une partie résiduelle de la puissance reçue de l'ambiguïté k de valeur N $\varepsilon_k^2$ et une protection résiduelle sur l'ambiguïté $\varepsilon_k^2/N$. La protection résiduelle totale vis-à-vis des 2(N-1) ambiguïtés est

$$(2/9)\left(\frac{\pi\omega}{\sin(i) Dist\lambda}\right)^2 \sigma^2_H (N-1)/N$$

$\sigma^2_H$ étant la moyenne quadratique des déviations d'altitude des 2(N-1) premières ambiguïtés de chaque côté (situées vers l'avant et vers l'arrière) du pixel traité considéré pour la correction interférométrique.

Dans la bande X avec une incidence de 50° et une distance de 1500km, avec $\sigma_H$ = 50 m, la largeur du tube doit être plus petite que 32 m pour N important et plus petite que 23 m pour N = 2 pour obtenir la protection résiduelle requise de -30 dB. Ces valeurs de largeurs sont proportionnelles à $\lambda$ et à la distance.

L'amélioration du facteur de mérite resserre fortement la contrainte sur la largeur de trajectoire par rapport à celle qui est requise pour l'addition de signal cohérent de base. Elle apporte également des contraintes sur la régularité du terrain. Toutefois, la mise en oeuvre pratique de l'amélioration du facteur de mérite est principalement limitée par la contrainte sur la trajectoire, sauf dans le cas de N=2 ou dans le cas de l'utilisation de formes d'ondes appropriées.

On va maintenant analyser le cas particulier où N=2.

L'espacement entre les deux satellites doit être de :

$$(2K+1)V/2PRF.$$

Ceci peut être obtenu en verrouillant la PRF sur la mesure de distance. En supposant une antenne relativement longue de 10 m, l'erreur d'échantillonnage maximale est de +/- 3,5cm et est éliminée par un réglage relatif de PRF de +/- 3,5 $10^{-5}$ si la distance entre les satellites est de 1 km.

Ce réglage précis de PRF n'est pas en conflit avec le réglage beaucoup plus grossier requis pour faire fonctionner l'instrument. La contrainte d'échantillonnage est basée uniquement sur la précision de la mesure de distance de l'ordre de 1 cm pouvant être obtenue, quand les deux satellites sont en visibilité, avec le GPS différentiel ou un quelconque système de mesure de distance RF si les deux satellites sont en visibilité. Les aspects pratiques des trains avec SAR en visibilité vont être envisagés ultérieurement.

La contrainte de largeur de tube et les contraintes de régularité de terrain présentées précédemment peuvent être atténuées, car il n'existe qu'une seule des deux ambiguïtés à un moment quelconque à l'intérieur de l'ouverture de 3 dB. Il est possible d'effectuer une correction interférométrique variable de façon linéaire basée sur l'altitude de l'ambiguïté vers l'avant au début de l'antenne synthétique et sur l'altitude de l'ambiguïté vers l'arrière à la fin.

L'annulation d'ambiguïté est alors commandée par la connaissance de l'altitude d'ambiguïté tandis que la différence d'altitude réelle avec celle du pixel traité influe sur la sommation de signal cohérent qui est un élément moins sensible. On suppose que la connaissance de la moyenne quadratique (ou RMS) de l'altitude peut être réduite à 20 m (dans le cas où $\sigma^2_H$ = 20 m cité plus haut), alors l'exigence de largeur de tube est de 58 m ($3\sigma$) et la différence d'altitude H (3h dans l'équation du paragraphe sur les conditions de cohérence du signal) entre les pixels traités et ambigus doit être plus petite que 430 m, tout ceci pour la bande X avec une incidence de 50° et une distance de 1500 km. Le concept n'est plus limité à des aires relativement plates.

On va maintenant s'attacher mode de réalisation utilisant des formes d'ondes à spectre étalé, c'est-à-dire au troisième mode de réalisation de l'invention.

En ce qui concerne la contrainte de l'addition de signal cohérent, il n'y a aucune modification par rapport à la forme impulsionnelle.

L'intérêt d'une onde à spectre étalé est relié au fait que les ambiguïtés se trouvent en tout point et profitent de l'addition non cohérente dans la mesure où les ondes ne sont pas corrélées sur la longueur de l'antenne synthétique ou dans la mesure où les distances de resynchronisation sont aléatoires à l'échelle de la longueur de récurrence et que l'antenne synthétique est un multiple de la récurrence.

Ces conditions sont plutôt faciles à remplir, à tout le moins en comparaison de la condition à remplir pour l'onde impulsionnelle.

Ces conditions ne sont pas affectées par la largeur de tube et la dernière est seulement contrainte par l'addition de signal cohérent. Ces relâches importantes dans les contraintes pour le contrôle de la formation des SAR représentent l'avantage principal de cette particularité de forme d'onde pour l'amélioration du facteur de mérite au-delà d'un facteur de 2.

On va maintenant décrire un cas spécifique avantageux où N SAR sont en visibilité et où il y a un émetteur unique.

Jusqu'à présent, dans la présente description, on a envisagé le cas général où tous les SAR étaient en visibilité et où tous les SAR étaient également émetteur.

Voyons maintenant comment se déroule un cas pratique de la mise en oeuvre de train SAR.

Tout ce qui a été dit auparavant suppose que ni la rétrodiffusion du pixel traité ni le retard atmosphérique ne varient entre les différents passages. En fait, tous deux varient et ceci est connu comme étant la limitation principale de l'interférométrie SAR à passages multiples, sauf si le retard de temps entre les passages est faible. Un train SAR avec plusieurs SAR en visibilité est une configuration robuste vis-à-vis de ces contraintes. Ceci facilite également la mesure des bases interférométriques nécessaire pour la correction interférométrique.

D'autre part, si tous les SAR transmettent, chaque antenne reçoit N signaux et réalise N images qui ne peuvent pas être séparées sauf en utilisant des formes d'ondes appropriées.

Avec des formes d'ondes d'impulsions standard, une solution consiste à avoir un seul SAR émetteur.

Considérons maintenant un train SAR avec un émetteur unique. Il correspond à un train équivalent de T/R SAR.

Comme représenté sur la figure 9, chaque couple formé par un émetteur et un récepteur correspond du point de vue de l'aller et retour de phase (ou de distance) à une antenne T/R équivalente située au point milieu entre l'émetteur et le récepteur. Si l'émetteur reçoit également, le T/R équivalent est le T/R réel. La longueur 15 est donc égale à la moitié de la longueur $d_N$.

On peut alors considérer un train SAR équivalent formé par les T/R équivalents. En raison de cet espacement à mi-chemin des satellites T/R équivalents, toutes les contraintes d'orbite précédemment analysées sont atténuées d'un facteur 2. C'est ce que l'on remarque sur la figure 9. La référence 14 reprend les antennes T/R virtuelles ou équivalentes. La distance référencée par 15 est le changement entre la distance T/R1 et RN et la distance T/RN et T/R1.

L'ensemble des N antennes doivent regarder la même aire du sol illuminée par l'antenne d'émission. L'ensemble des antennes synthétiques équivalentes commencent et finissent en même temps mais sont décalées par rapport à celles du T/R de la moitié de la distance entre le T et chaque R. La combinaison SAR peut être effectuée seulement dans la partie en recouvrement des antennes synthétiques équivalentes et la longueur globale est en conséquence réduite de la longueur de formation virtuelle ou de la moitié de la longueur de formation réelle. Ceci signifie que la longueur de formation doit être faible par rapport à la longueur de l'antenne synthétique.

Le signal d'émission est additionné de façon cohérente N fois. Bien qu'il n'y ait qu'un seul émetteur, le SNR de la combinaison de N SAR est le même que pour un train de N T/R sans visibilité. Tous les avantages de concept d'un train standard sans visibilité s'appliquent ici également, mais la puissance d'émission totale est réduite de N.

Cette configuration avec 2 T/R équivalents (1 T/R et 1 R ou 1 T et 2 R) facilite la mise en oeuvre du doublage du facteur de mérite décrit plus haut pour le cas N = 2, en particulier pour la mesure de distance entre les deux T/R équivalents.

Lorsque la forme d'onde de spectre étalé est utilisée, les distances de synchronisation sont beaucoup plus petites que la longueur de l'antenne synthétique. Ainsi, les avantages du train demandent un signal périodique et les T/R équivalents doivent être répartis de façon aléatoire sur la longueur de récurrence, c'est-à-dire que les satellites réels doivent être répartis de façon aléatoire sur le double de la longueur de récurrence.

On examine maintenant l'impact direct entre la transmission et la réception.

Malgré les faibles gains de l'antenne le long de l'arc orbital, les SAR peuvent recevoir directement le signal transmis à des niveau beaucoup plus haut que l'écho efficace. Les isolations de l'antenne doivent au moins éviter la saturation du récepteur.

La contrainte est relâchée de plus de 10dB par le spectre étalé, puisque la transmission est continu au lieu d'être concentré sur des pics représentant moins d'un dixième du temps. Avec un spectre étalé, le signal direct est étalé sur toute l'image avec un facteur de réduction 1/4BT comme représenté aux figures 7A et 7B. La réduction est typiquement égale à -80dB. Une telle réduction aide de façon importante la compatibilité.

Avec un signal impulsionnel, l'étalement en distance est très faible du fait de la faible désadaptation de la corrélation distance et correspond en Doppler à T PRF pixels en Doppler, ce qui correspond environ à environ - 30dB.

Par contre, les signaux impulsionnels peuvent annuler complètement ce problème, y compris la saturation, en rejetant le signal direct grâce à la synchronisation, au prix de contraintes supplémentaires sur la synchronisation et le cycle de service.

On considère maintenant un train SAR en visibilité avec plusieurs émetteurs, c'est-à-dire que chacun des SAR du train de SAR considéré auparavant est émetteur et récepteur, et que les formes d'ondes de spectre étalé sont distinctes et non corrélées. Chaque SAR émetteur commande un train SAR. Il existe une addition cohérente supplémentaire entre les N trains SAR avec une addition non cohérente des ambiguïtés car les formes d'ondes ne sont pas corrélées. Le SNR est amélioré de N, ou le facteur de mérite est de nouveau accru de N au prix d'une nouvelle dégradation de N du SNR. La première option peut être l'aboutissement logique du concept de train SAR car elle conduit à une amélioration de N du facteur de mérite avec un SNR inchangé. Mais l'invention autorise toutes sortes de variations à chacun des deux niveaux de train, train de SAR et train de trains.

## Revendications

1. Procédé de traitement de signal et de guidage de plusieurs instruments comportant N radars (1) à synthèse d'ouverture pour l'observation d'une cible (6), les instruments comportant au moins une paire formée d'un émetteur et d'un récepteur, lesdits radars (1) étant situés sur des instruments distincts évoluant en formation sensiblement sur une même trajectoire, ledit procédé étant **caractérisé en ce qu'**on répète l'addition, corrigée des différences de trajet aller-retour à la cible, en mode complexe des échantillons issus d'une pluralité de paires se différenciant chacune par leur émetteur et/ou leur récepteur, l'ensemble des additions étant effectué sur des paires dont le point milieu est sensiblement situé, dans un repère local lié à la cible et au moment de l'addition corrigée, sur un même tronçon (13) de trajectoire correspondant sensiblement à la longueur de l'antenne synthétique formée par les radars (1).

2. Procédé selon la revendication 1, **caractérisé en ce que** plusieurs paires utilisent un même émetteur (T/R1).

3. Procédé selon l'une des revendications 1 ou 2, **caractérisé en ce que** les échantillons des radars (1) sont émis de manière périodique et **en ce que** entre deux positions du point milieu d'une paire donnée, les positions étant prises aux moments milieux entre émission et réception de l'échantillon, correspondant à deux échantillons successifs pour une même paire, d'autres positions de points milieux correspondant à des échantillons d'autres paires se trouvent répartie de manière périodique.

4. Procédé selon la revendication 3, **caractérisé en ce qu'**on asservit la période de répétition des échantillons de l'émetteur à (2K+1)V/2D, où V est la vitesse linéaire de déplacement des radars (1) dans le repère local, K est un entier quelconque et D est la mesure de la distance entre deux points milieux de deux paires.

5. Procédé selon la revendication 4, **caractérisé en ce qu'**on établit la mesure D à l'aide d'un système de télémétrie directe entre les deux récepteurs (1) des deux paires considérées.

**6.** Procédé selon la revendication 1, **caractérisé en ce que** pour un groupe d'au moins deux paires, le signal est émis et reçu de manière continue sur au moins une partie du tronçon, et comporte une fonction d'autocorrélation étalée en temps et en fréquence et à bas niveau par rapport au pic central.

**7.** Procédé selon la revendication 6, **caractérisé en ce qu'**on module le signal en phase entre Pi et -Pi selon une série binaire aléatoire, le signal étant une fréquence pure.

**8.** Procédé selon l'une des revendications 6 à 7, **caractérisé en ce qu'**on utilise un signal continu périodique avec la même série de signal pour toutes les paires du groupe et une période sensiblement identique, et **en ce que** entre les deux positions du point milieu d'une même paire correspondant à deux émissions/réceptions successives d'un même élément de la série du signal continu se trouvent répartis aléatoirement les points milieux des autres paires correspondant à l'émission/réception du même élément de la série.

**9.** Procédé selon la revendication 8, **caractérisé en ce que** la longueur du tronçon (13) est un multiple de la distance (11) entre les deux positions du point milieu d'une même paire correspondant à deux émissions/réceptions successives d'un même élément de la série du signal.

**10.** Procédé selon l'une des revendications 6 à 7, **caractérisé en ce qu'**on utilise pour le signal continu des formes d'onde décorrélées entre les paires.

**11.** Procédé selon l'une des revendications 6 à 10 en combinaison avec la revendication 2, **caractérisé en ce qu'**on utilise plusieurs émetteurs, les paires partageant un même émetteur formant un même groupe, et **en ce que** les signaux de groupes distincts sont décorrélés d'un groupe à l'autre.

**12.** Ensemble de plusieurs instruments formant N radars (1) à synthèse d'ouverture pour l'observation d'une cible (6), comportant au moins une paire formée d'un émetteur et d'un récepteur, lesdits radars (1) étant situés sur des instruments distincts évoluant en formation sensiblement sur une même trajectoire, ledit ensemble étant **caractérisé en ce qu'**il comporte une pluralité de paires et des moyens aptes à effectuer l'addition, corrigée des différences de trajet aller-retour à la cible, en mode complexe des échantillons issus d'une pluralité de paires se différenciant par l'émetteur ou le récepteur, l'ensemble des additions étant effectué sur des paires dont le point milieu est sensiblement situé, dans un repère local lié à la cible et au moment de l'addition corrigée, sur un même tronçon (13) de trajectoire correspondant sensiblement à la longueur de l'antenne synthétique formée par les radars (1).

**13.** Ensemble selon la revendication 12, **caractérisé en ce que** les instruments sont portés par des satellites autour d'un astre.

**14.** Ensemble selon l'unes des revendications 12 à 13, **caractérisé en ce qu'**il comporte les moyens aptes à mettre en oeuvre le procédé selon l'une des revendications 1 à 11.

**Claims**

**1.** A method for signal processing and the guiding of several instruments comprising N synthetic aperture radars (1) for the observation of a target (6), the instruments comprising at least one pair formed by an emitter and a receiver, said radars (1) being located on separate instruments moving in formation substantially on one same pathway, said method being **characterized in that** repeat additions are performed, corrected for differences in return pathway to the target, in complex mode of the samples derived from a plurality of pairs each differing through their emitter and/or receiver, all the additions being performed on pairs whose midpoint is substantially located, within a local reference position related to the target and at the time of the corrected addition, on one same pathway section (13) substantially corresponding to the length of the synthetic antenna formed by the radars (1).

**2.** The method according to claim 1 **characterized in that** several pairs use one same emitter (T/R1).

**3.** The method according to one of claims 1 or 2 **characterized in that** the samples of the radars (1) are emitted periodically and **in that**, between two positions of the midpoint of a given pair, the positions being taken at mid-moments between the emission and receiving of the sample corresponding to two successive samples for one same pair, other positions of midpoints corresponding to samples of other pairs are distributed periodically.

**4.** The method according to claim 3 **characterized in that** the period of repetition of the samples of the emitter is controlled by (2K+1)V/2D where V is the linear velocity of motion of the radars (1) within the local reference position, K is any integer and D is the measurement of the distance between two midpoints of two pairs.

**5.** The method according to claim 4 **characterized in that** the measurement D is determined by means of a direct telemetry system between the two receivers (1) of the two pairs under consideration.

**6.** The method according to claim 1 **characterized in that** for a group of at least two pairs, the signal is emitted and received continuously over at least one part of the section, and comprises a function of time- and frequency-spread autocorrelation and at low level relative to the central peak.

**7.** The method according to claim 6 **characterized in that** the signal is phase modulated between Pi and -Pi according to a random binary series, the signal being a pure frequency.

**8.** The method according to one of claims 6 to 7 **characterized in that** a periodic continuous signal is used with the same signal series for all the pairs of the group and with a substantially identical period and **in that**, between the two positions of the midpoint of one same pair corresponding to two successive emissions/receptions of one same element of the series of the continuous signal, there is random distribution of the midpoints of the other pairs corresponding to the emission/reception of the same element of the series.

**9.** The method according to claim 8 **characterized in that** the length of the section (13) is a multiple of the distance (11) between the two positions of the midpoint of one same pair corresponding to two successive emissions/receptions of one same element of the signal series.

**10.** The method according to one of claims 6 to 7 **characterized in that**, for the continuous signal, decorrelated waveforms between the pairs are used.

**11.** The method according to one of claims 6 to 10 in combination with claim 2 **characterized in that** several emitters are used, the pairs sharing one same emitter forming one same group, and **in that** the signals of separate groups are decorrelated from one group to another.

**12.** An assembly of several instruments forming N synthetic aperture radars (1) for observing a target (6), comprising at least one pair formed by an emitter and a receiver, said radars (1) being located on separate instruments moving in formation substantially on one same pathway, said assembly being **characterized in that** it comprises a plurality of pairs and means capable of performing the addition, corrected for the differences in the return pathway to the target, in complex mode of the samples derived from a plurality of pairs differing through the emitter or the receiver, all the additions being performed on pairs whose midpoint is substantially located, within a local reference position related to the target and at the time of the corrected addition, on one same section (13) of pathway corresponding substantially to the length of the synthetic antenna formed by the radars (1).

**13.** The assembly according to claim 12 **characterized in that** the instruments are carried by satellites around a star.

**14.** The assembly according to one of claims 12 to 13 **characterized in that** it comprises means capable of implementing the method according to one of claims 1 to 11.

**Patentansprüche**

**1.** Verfahren zur Signalverarbeitung und zur Führung mehrerer Instrumente, welche N Radare (1) mit synthetischer Apertur zur Beobachtung eines Ziels (6) aufweisen, wobei die Instrumente wenigstens ein Paar aufweisen, das aus einem Sender und einem Empfänger gebildet wird, wobei sich die Radare (1) auf verschiedenen Instrumenten befinden, die sich in Formation auf einer in etwa gleichen Flugbahn bewegen, wobei das Verfahren **dadurch gekennzeichnet ist, dass** man die Addition, die um die Hin- und Rücklauf-Differenzen zum Ziel korrigiert ist, im komplexen Modus von Proben, die von einer Mehrzahl an Paaren stammen, die sich jeweils durch ihren Sender und/oder ihren Empfänger unterscheiden, wiederholt, wobei die Gesamtheit der Additionen an Paaren durchgeführt wird, deren Mittelpunkt sich, in einem mit dem Ziel verbundenen lokalen Bezugspunkt und zum Zeitpunkt der korrigierten Addition, in etwa auf einem gleichen Abschnitt (13) der Flugbahn, der in etwa der Länge der durch die Radare (1) gebildeten synthetischen Antenne entspricht, befindet.

**2.** Verfahren gemäß Anspruch 1, **dadurch gekennzeichnet, dass** mehrere Paare einen gleichen Sender (T/R1) verwenden.

**3.** Verfahren gemäß einem der Ansprüche 1 oder 2, **dadurch gekennzeichnet, dass** die Proben der Radare (1) periodisch ausgesendet werden, und dass zwischen zwei Mittelpunktpositionen eines gegebenen Paares, welche zu mittleren Zeitpunkten zwischen dem Aussenden und dem Empfang der Probe genommen werden, die zwei aufeinander folgenden Proben für ein gleiches Paar entsprechen, andere Mittelpunktpositionen, die Proben anderer Paare entsprechen, periodisch verteilt sind.

**4.** Verfahren gemäß Anspruch 3, **dadurch gekennzeichnet, dass** man die Wiederholungsperiode der Proben des Senders bei (2K+1)V/2D steuert, wobei V die lineare Geschwindigkeit der Verschiebung der Radare (1) in dem lokalen Bezugspunkt ist, und K irgendeine ganze Zahl ist, und D das Maß des Abstands zwischen zwei Mittelpunkten zweier Paare ist.

**5.** Verfahren gemäß Anspruch 4, **dadurch gekennzeichnet, dass** man das Maß D mit Hilfe eines direkten Telemetriesystems zwischen den beiden Empfängern (1) zweier betrachteter Paare etabliert.

**6.** Verfahren gemäß Anspruch 1, **dadurch gekennzeichnet, dass** für eine Gruppe aus mindestens zwei Paaren das Signal kontinuierlich auf wenigstens einem Teilabschnitt ausgesendet und empfangen wird und eine Autokorrelationsfunktion aufweist, die sich in Zeit und Frequenz und, in Bezug auf den zentralen Peak, auf niedrigem Niveau ausbreitet.

**7.** Verfahren gemäß Anspruch 6, **dadurch gekennzeichnet, dass** man das Signal in Phase zwischen Pi und -Pi gemäß einer zufälligen binären Reihenfolge moduliert, wobei das Signal eine reine Frequenz ist.

**8.** Verfahren gemäß einem der Ansprüche 6 bis 7, **dadurch gekennzeichnet, dass** man ein periodisches kontinuierliches Signal mit der gleichen Signalreihenfolge bei allen Paaren der Gruppe und einen in etwa identischen Zeitabschnitt verwendet, und dass zwischen den beiden Mittelpunktpositionen eines gleichen Paares, welche zwei aufeinander folgenden Aussendungen/Empfängen eines gleichen Elements der Reihe kontinuierlicher Signale entsprechen, die Mittelpunkte der anderen Paare, die dem Aussenden/Empfang des gleichen Elements der Reihe entsprechen, zufällig verteilt sind.

**9.** Verfahren gemäß Anspruch 8, **dadurch gekennzeichnet, dass** die Länge des Abschnitts (13) ein Vielfaches des Abstands (11) zwischen den beiden Mittelpunktpositionen eines gleichen Paares, welche zwei aufeinander folgenden Aussendungen/Empfängen eines gleichen Elements der Signalreihe entsprechen, beträgt.

**10.** Verfahren gemäß einem der Ansprüche 6 bis 7, **dadurch gekennzeichnet, dass** man für das kontinuierliche Signal dekorrelierte Wellenformen zwischen den Paaren verwendet.

**11.** Verfahren gemäß einem der Ansprüche 6 bis 10 in Kombination mit Anspruch 2, **dadurch gekennzeichnet, dass** man mehrere Sender verwendet, wobei die Paare, die sich einen gleichen Sender teilen, eine gleiche Gruppe bilden, und dass die Signale der verschiedenen Gruppen von einer Gruppe zur anderen dekorreliert sind.

**12.** Satz aus mehreren Instrumenten, welche N Radare (1) mit synthetischer Apertur zur Beobachtung eines Ziels (6) bilden, welche wenigstens ein Paar aufweisen, das aus einem Sender und einem Empfänger gebildet wird, wobei sich die Radare (1) auf verschiedenen Instrumenten befinden, die sich in Formation auf einer in etwa gleichen Flugbahn bewegen, wobei der Satz **dadurch gekennzeichnet ist, dass** er eine Mehrzahl an Paaren und Mittel aufweist, die geeignet sind, die Addition, korrigiert um die Hin- und Rücklauf-Differenzen zum Ziel, im komplexen Modus von Proben, die von einer Mehrzahl an Paaren stammen, die sich durch ihren Sender oder ihren Empfänger unterscheiden, durchzuführen, wobei die Gesamtheit der Additionen an Paaren durchgeführt wird, deren Mittelpunkt sich, in einem mit dem Ziel verbundenen lokalen Bezugspunkt und zum Zeitpunkt der korrigierten Addition, in etwa auf einem gleichen Abschnitt (13) der Flugbahn, der in etwa der Länge der durch die Radare (1) gebildeten synthetischen Antenne entspricht, befindet.

**13.** Satz gemäß Anspruch 12, **dadurch gekennzeichnet, dass** die Instrumente von um einen Stern kreisenden Satelliten getragen werden.

**14.** Satz gemäß einem der Ansprüche 12 bis 13, **dadurch gekennzeichnet, dass** er Mittel aufweist, die zur Durchführung des Verfahrens gemäß einem der Ansprüche 1 bis 11 geeignet sind.

**FIG.1**

**FIG.2**

6x

## FIG_3

## FIG_4

FIG.5B

FIG.6

**FIG 7A**

**FIG 7B**

**FIG 8**

15

$d_N$ 15

| RN | | R3 | | R2 | T/RN | T/R3 | T/R2 | | T/R1 |

14

## FIG_9

11

N'

## FIG_10

3

S0    S2    S3

S1    S3

12

V/NPRF

## FIG_5A

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9958997 A